# DEMANDE DE BREVET EUROPEEN

(11) **EP 1 333 174 A1**
(43) Date de publication de la demande: **06.08.2003**
(21) Numéro de dépôt: 03290199.3
(22) Date de dépôt: 27.01.2003
(51) Int. Cl.: F02N 11/10, F02N 11/08

(54) **Dispositif pour actionner automatiquement le démarreur du moteur thermique d'un véhicule**

(30) Priorité: 30.01.2002 FR 0201109
(71) Demandeur: DEFONTAINE, 85530 La Bruffière (FR)
(72) Inventeur: Ferrouillet, Gilles, 44000 Nantes (FR); Bonnefous, Jean, 44400 Reze (FR); Sagot, Benoit, 44190 Gorges (FR); Douillard, Frank, 85610 La Bernadière (FR); Gaudu, Serge, 85600 Montaigu (FR)
(74) Mandataire: Rémont, Claude

(57) **Abrégé**

Le dispositif (1) comporte les moyens formant interrupteurs suivants montés en série :
- détecteur (4) de la présence d'une personne sur le siège (5) du conducteur ;
- détecteur (6) de la présence d'un moyen formant transpondeur (7) autorisant le démarrage du moteur ;
- détecteur (8) de la position débrayée de la pédale d'embrayage (9)
- détecteur (10) d'une position enclenchée du levier (11) de changement de vitesse.

## Description

La présente invention concerne un dispositif pour actionner automatiquement le démarreur d'un moteur thermique d'un véhicule.

La présente invention concerne également un véhicule équipé d'un tel dispositif.

Chaque véhicule automobile est équipé d'un dispositif comportant au moins un organe d'ouverture et de fermeture du circuit de démarrage dudit véhicule, par exemple un interrupteur solidaire d'une clef de contact, adapté à être actionné volontairement par un conducteur du véhicule pour alimenter le démarreur de ce véhicule en énergie électrique venant d'une batterie.

Les conducteurs de véhicules recherchent de plus en plus les automatismes adaptés à simplifier leurs taches pour leur permettre de se concentrer sur la conduite du véhicule, ces automatismes ne devant en aucun cas mettre en péril le bon fonctionnement de ce véhicule.

Par ailleurs, des pressions de plus en plus fortes pour la protection de l'environnement s'exercent en faveur d'un mode de fonctionnement d'un véhicule dit "stop and go" imposant l'arrêt du moteur pratiquement dès qu'un véhicule se trouve à l'arrêt depuis un court laps de temps, par exemple devant un signal lumineux rouge ou devant un embouteillage du trafic automobile.

Il faut donc redémarrer le moteur pour déplacer le véhicule dès que la voie est libre, ce qui milite en faveur d'un dispositif automatique du type précité adapté à être actionné à partir des manoeuvres effectuées normalement lorsqu'il s'agit de déplacer un véhicule à l'arrêt.

Suivant la présente invention, le dispositif du type précité est caractérisé en ce qu'il comporte les organes d'ouverture et de fermeture suivants montés en série :
- détecteur de la présence d'une personne sur le siège du conducteur ;
- détecteur de la présence d'un moyen formant transpondeur autorisant le démarrage ;
- détecteur de la position débrayée de la pédale d'embrayage ;
- détecteur d'une position enclenchée du levier de changement de vitesse.

Les deux premiers détecteurs confirment la présence d'une personne et la volonté de celle-ci de déplacer le véhicule.

Les deux derniers détecteurs détectent simplement les deux manoeuvres effectuées par le conducteur d'un véhicule à boite de vitesse manuelle chaque fois qu'il veut déplacer ce véhicule à partir d'une position à l'arrêt.

Dans ces conditions, le détecteur d'une position enclenchée, en marche avant ou en marche arrière, du levier de changement de vitesse constitue l'équivalent de l'interrupteur solidaire de la clef de contact d'un véhicule classique pour actionner le démarreur du moteur de ce véhicule.

Selon une version avantageuse de l'invention, le dispositif ci-dessus comporte en outre des moyens pour commander automatiquement l'arrêt du moteur lorsque le véhicule est à l'arrêt depuis une période de temps prédéterminée, notamment afin d'autoriser pour le moteur un mode de fonctionnement de type dit "stop and go".

Selon une version préférée de la présente invention, le dispositif ci-dessus comporte des moyens logiques adaptés à gérer en temps réel la quantité d'énergie disponible dans la batterie du véhicule pour détecter une situation de réserve d'énergie insuffisante, inférieure à un seuil minimal prédéterminé, et pour modifier le mode de fonctionnement du moteur d'une façon appropriée prédéterminée.

D'autres particularités et avantages de la présente invention apparaîtront dans la description détaillée ci-après.

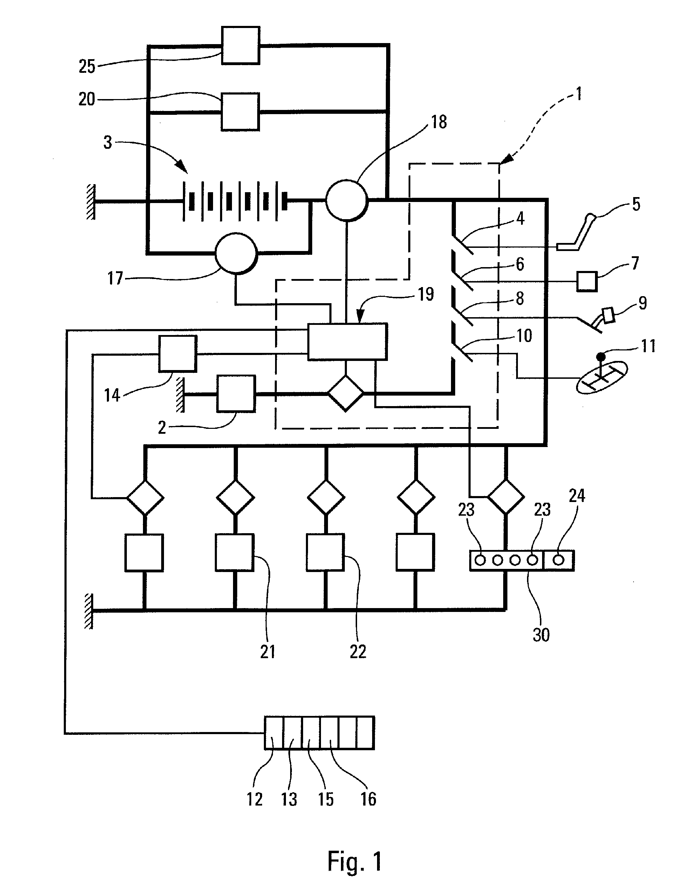

Au dessin annexé donné uniquement à titre d'exemple non limitatif, la figure 1 représente un schéma très simplifié du circuit électrique d'un véhicule comprenant un dispositif selon un mode de réalisation de la présente invention, les câbles d'alimentation étant représentés en traits épais.

Comme schématisé à la figure 1, le dispositif 1 pour actionner automatiquement le démarreur, schématisé en 2, du moteur thermique (non représenté) d'un véhicule, comporte au moins un organe d'ouverture et de fermeture du circuit de démarrage, adapté à être actionné volontairement par un conducteur du véhicule pour alimenter le dit démarreur 2 en énergie électrique venant d'une batterie 3. Cet organe peut-être constitué par une clé de contact que le conducteur tourne pour actionner le démarreur.

Suivant la présente invention, le dispositif 1 comporte les moyens formant organes d'ouverture et de fermeture suivants montés en série :
- détecteur 4 de la présence d'une personne sur le siège, schématisé en 5, du conducteur ;
- détecteur 6 d'un moyen formant transpondeur, schématisé en 7, autorisant le démarrage du moteur ;
- détecteur 8 de la position débrayée de la pédale d'embrayage, schématisée en 9 ;
- détecteur 10 d'une position enclenchée du levier de changement de vitesse, schématisé en 11.

Le dispositif 1 comporte en outre de façon classique un détecteur de la situation en marche ou à l'arrêt du véhicule et un détecteur de la situation en marche ou à l'arrêt du moteur, schématisés respectivement en 12 et 13.

Dans ces conditions, lorsque les quatre détecteurs 4,6,8 et 10 sont en position fermée, le moteur et le véhicule étant à l'arrêt, le dispositif 1 actionne automatiquement le démarreur 2 pour faire tourner le moteur thermique afin de permettre le déplacement du véhicule.

Les détecteurs précités 4, 6, 8, 10, 12 et 13 sont des détecteurs classiques d'un modèle connu quelconque, avec ou sans contact, qu'il est inutile de décrire ici.

De même, le transpondeur 7 est un transpondeur d'un type connu quelconque, communiquant d'une manière quelconque avec le détecteur 6, par exemple par contact électrique, par rayons infrarouges ou par radio.

Dans l'exemple représenté à la figure 1, le dispositif 1 comporte en outre des moyens, schématisés en 14 et connus en eux-mêmes, pour commander automatiquement l'arrêt du moteur lorsque le véhicule est à l'arrêt depuis une période de temps prédéterminée, notamment afin d'autoriser pour le moteur un mode de fonctionnement de type dit "stop and go".

Ces moyens comprennent, notamment, le détecteur 12 de la situation en marche ou à l'arrêt du véhicule, le détecteur 13 de la position en marche ou à l'arrêt du moteur, des moyens de comptage du temps, schématisés en 15, notamment pour comparer la durée de la période de temps écoulée depuis le dernier arrêt du véhicule à une période de temps prédéterminée.

Le dispositif selon la présente invention permet ainsi pour le véhicule et pour le moteur du véhicule un mode de fonctionnement du type dit "stop and go" souple et précis facilitant la tâche du conducteur sans limiter les possibilités d'action de ce dernier.

Dans cet exemple, le dispositif 1 comporte en outre des moyens, schématisés en 16, pour détecter une situation de manoeuvres diverses proches les unes des autres et effectuées à faible vitesse par le véhicule afin de modifier la durée de la période d'arrêt du véhicule au bout de laquelle l'arrêt du moteur est commandé automatiquement.

Le dispositif 1 est ainsi adapté à contrôler une succession en un court instant de manoeuvres du véhicule en marche avant et/ou marche arrière, de courtes durées, et proches les unes des autres, et/ou une succession d'arrêts du moteur de courtes durées et proches les uns des autres, associés à des vitesses faibles du véhicule, pour détecter une telle situation de manoeuvres diverses et modifier le mode de contrôle du fonctionnement du moteur.

Il convient dans ce cas d'augmenter la durée de la période d'arrêt du véhicule au bout de laquelle l'arrêt du moteur est commandé automatiquement, de façon à ne pas interrompre de façon intempestive les manoeuvres du véhicule.

Il est bien entendu nécessaire de surveiller automatiquement l'état de la batterie 3 pour éviter un arrêt automatique du moteur dans le cas d'un arrêt de durée brève du véhicule alors que la batterie 3 ne serait plus capable de fournir au démarreur 2 un courant suffisant pour démarrer le moteur.

Le dispositif 1 comporte ainsi des moyens formant voltmètre, schématisés en 17, pour détecter en permanence la différence de potentiel V aux bornes de la batterie 3, et des moyens formant ampèremètre, schématisés en 18, pour mesurer en permanence l'intensité I du courant issu de la batterie 3, des moyens pour calculer la puissance instantanée P=VI fournie par la batterie 3, et des moyens pour comparer cette puissance instantanée à une valeur limite inférieure prédéterminée afin d'interdire le fonctionnement du type "stop and go" du moteur si ladite puissance instantanée est inférieure à ladite limite inférieure.

De façon plus complète, le dispositif comporte des moyens logiques, schématisés en 19, adaptés à gérer en temps réel la quantité d'énergie disponible dans la batterie du véhicule pour détecter une situation de réserve d'énergie insuffisante, inférieure à un seuil minimal prédéterminé, et modifier le mode de contrôle du fonctionnement du moteur d'une façon appropriée prédéterminée.

Le dispositif 1 est ainsi capable de calculer la quantité d'énergie disponible dans la batterie 3 et de mesurer les échanges de quantités d'énergie entre la batterie 3 et l'alternateur, schématisé en 20, d'une part, et d'autre part les divers auxiliaires du véhicule, démarreur 2, éclairages intérieurs 21, feux de route ou de croisement 22, climatisation, chauffage, etc.

Ainsi, un démarreur utilisant par exemple 300A (ampères) pendant une seconde consomme une énergie de 300A.sec, par contre, des feux de croisement et d'autres auxiliaires techniques du véhicule utilisant par exemple un courant de 50A consomment en 6 secondes la même énergie de 300A.sec.

En revanche, un alternateur peut par exemple débiter un courant de 90 ampères pour compenser la consommation d'énergie du véhicule.

Les moyens logiques 19 comprennent ainsi des moyens adaptés à interrompre le mode de fonctionnement du moteur dit "stop and go" et, le cas échéant, à augmenter la vitesse de rotation du moteur tournant au ralenti, afin d'augmenter l'intensité du courant délivré par l'alternateur, après détection d'une situation de réserve d'énergie insuffisante.

Les moyens logiques 19 comprennent également des moyens pour détecter et signaler une situation de moteur chaud et de batterie complètement chargée, et le cas échéant un interrupteur adapté à être actionné manuellement par le conducteur du véhicule, pour autoriser dans cette situation un fonctionnement automatique du moteur dans le mode dit "stop and go".

Les moyens logiques 19 sont nécessairement reliés aux voyants lumineux, schématisés en 23, présents sur le tableau de bord 30 du véhicule.

Lors d'un premier démarrage, moteur froid, les voyants lumineux 23 fonctionnent d'une manière habituelle : ils sont allumés lorsque les circuits électriques du véhicule sont mis sous tension, puis s'éteignent lorsque le moteur tourne régulièrement et qu'aucun défaut n'est à signaler.

Dès que le dispositif "stop and go" met le moteur en route, il y a surveillance de la tension de la batterie, et on dira qu'elle est chargée à 100% quand la tension sera de 14,8 volts par exemple.

Le dispositif "stop and go" ne sera activé que lorsque la batterie 3 est chargée à 100%.

Dès que le dispositif "stop and go" arrête le moteur, les voyants lumineux 23 du tableau de bord 30 sont inhibés et seul un voyant vert 24 "moteur prêt à démarrer" est activé.

Dès que le conducteur fait redémarrer le véhicule, le voyant vert 24 s'éteint et le fonctionnement des voyants lumineux 23 (charge, huile, airbag, ABS...) est rétabli pour assurer la surveillance de leurs fonctions respectives.

Ensuite les compteurs de consommation d'énergie (Ampère - temps) positive et négative gèrent les variations de la quantité d'énergie électrique disponible dans la batterie.

Quand ce niveau descend en dessous d'un seuil, 50% par exemple, le "stop and go" est inhibé et l'alternateur 20 remonte la quantité d'énergie électrique emmagasinée à un seuil supérieur, 80 ou 100%. De la sorte, le véhicule ne peut être arrêté avec une quantité d'énergie électrique inférieure à cette valeur prédéterminée, afin de rendre le redémarrage, même après un arrêt prolongé de plusieurs semaines, toujours possible.

On pourra ajouter aux instruments de bord une jauge de quantité d'énergie électrique disponible dans la batterie (0 à 100%).

Le microprocesseur 19 pourra ainsi s'assurer que le bilan, au démarrage à froid, de la quantité d'énergie électrique restante au moment du départ plus l'énergie apportée par l'alternateur au démarrage jusqu'à 14,8 volts par exemple est cohérente avec la capacité théorique de la batterie, et s'il y a un écart, par exemple de plus de 10%, un voyant défaut de batterie (par perte interne) pourra être signalé pour maintenance préventive avant que le stade "départ du moteur impossible" par batterie défectueuse ne soit atteint.

Dans le cas où le véhicule est équipé d'une boite de vitesses automatique, le dispositif décrit ci-dessus doit être adapté en conséquence.

Le détecteur 8 de la position débrayée de la pédale d'embrayage 9 doit être remplacé, le cas échéant par un détecteur (non représenté) de la position actionnée de la pédale de frein ou du levier de frein à main (non représentés).

De même, le détecteur 10 d'une position enclenchée du levier 11 de changement de vitesse doit être remplacé par un détecteur (non représenté) d'une position accélérée de la pédale d'accélérateur.

Pour un démarrage avec un moteur froid, les règlements de sécurité imposent en outre un détecteur d'une position neutre ou non-enclenchée du levier de commande de la boite de vitesses automatique.

Si ces mêmes règlements de sécurité l'autorisent, le détecteur précité de la position actionnée de la pédale de frein ou du levier de frein à main peut-être annulé ou peut-être équipé d'un interrupteur de mise en service ou hors service devant être actionné manuellement par le conducteur du véhicule.

Tous les autres modes de réalisations décrits ci-dessus en référence à un véhicule équipé d'une boite de vitesses manuelle sont automatiquement adaptables à un véhicule équipé d'une boite de vitesses automatique et du dispositif précité selon la présente invention.

Un véhicule automobile à moteur thermique comportant un dispositif 1 selon un mode de réalisation de la présente invention peut comporter avantageusement des cellules photovoltaïques, schématisées en 25 à la figure 1, et des moyens pour alimenter en permanence la batterie 3 du véhicule à partir desdites cellules photovoltaïques 25.

Bien entendu, la présente invention n'est pas limitée aux modes de réalisation que l'on vient de décrire, et on peut apporter à ceux-ci de nombreux changements et modifications sans sortir du domaine de la présente invention.

## Revendications

1. Dispositif (1) pour actionner automatiquement le démarreur (2) du moteur thermique d'un véhicule, ce dispositif (1) comportant au moins un organe d'ouverture et de fermeture du circuit de démarrage, adapté à être actionné volontairement par un conducteur du véhicule pour alimenter ledit démarreur (2) en énergie électrique venant d'une batterie (3),
**caractérisé en ce qu'**il comporte les organes d'ouverture et de fermeture suivants montés en série :
- détecteur (4) de la présence d'une personne sur le siège (5) conducteur ;
- détecteur (6) de la présence d'un moyen formant transpondeur (7) autorisant le démarrage du moteur ;
- détecteur (8) de la position débrayée de la pédale d'embrayage (9)
- détecteur (10) d'une position enclenchée du levier (11) de changement de vitesse.

2. Dispositif (1) pour actionner automatiquement le démarreur (2) du moteur d'un véhicule, ce dispositif (1) comportant au moins un organe d'ouverture et de fermeture du circuit de démarrage, adapté à être actionné volontairement par un conducteur du véhicule pour alimenter ledit démarreur (2) en énergie électrique venant d'une batterie (3), le véhicule étant équipé d'une boite de vitesses automatique, **caractérisé en ce qu'**il comporte les organes d'ouverture et de fermeture suivants montés en série :
- détecteur (4) de la présence d'une personne sur le siège (5) du conducteur ;
- détecteur (6) de la présence d'un moyen formant transpondeur (7) autorisant le démarrage du moteur ;
- le cas échéant, détecteur de la position actionnée de la pédale de frein ou du levier de frein à main ;
- détecteur d'une position accélérée de la pédale d'accélérateur.

3. Dispositif selon la revendication 1 ou 2, **caractérisé en ce qu'**il comporte en outre des moyens (14) pour commander automatiquement l'arrêt du moteur lorsque le véhicule est à l'arrêt depuis une période de temps prédéterminée, notamment afin d'autoriser pour le moteur un mode de fonctionnement du type dit "stop and go".

4. Dispositif selon la revendication 3, **caractérisé en ce qu'**il comporte en outre des moyens (16) pour détecter une situation de manoeuvres diverses effectuées à faible vitesse par le véhicule afin de modifier la durée de la période d'arrêt du véhicule au bout de laquelle l'arrêt du moteur est commandé.

5. Dispositif selon l'une quelconque des revendications précédentes, **caractérisé en ce qu'**il comporte en outre des moyens (17, 18) pour détecter en permanence la différence de potentiel aux bornes de la batterie (3) et l'intensité du courant issu de la batterie (3), des moyens pour calculer la puissance instantanée fournie par la batterie (3), et des moyens pour comparer cette puissance instantanée à une valeur limite inférieure prédéterminée afin d'interdire le fonctionnement du type "stop and go" du moteur lorsque ladite puissance instantanée est inférieure à ladite limite inférieure.

6. Dispositif selon l'une quelconque des revendications précédentes, **caractérisé en ce qu'**il comporte des moyens logiques (19) adaptés à gérer en temps réel la quantité d'énergie disponible dans la batterie (3) du véhicule pour détecter une situation de réserve d'énergie insuffisante, inférieure à un seuil minimal prédéterminé, et modifier le mode de fonctionnement du moteur d'une façon appropriée prédéterminée.

7. Dispositif selon la revendication 6, **caractérisé en ce que** les moyens logiques (19) comprennent des moyens adaptés à interrompre le mode de fonctionnement du moteur dit "stop and go" et le cas échéant à augmenter la vitesse de rotation du moteur tournant au ralenti, après détection d'une situation de réserve d'énergie insuffisante

8. Dispositif selon la revendication 6 ou 7, **caractérisé en ce que** les moyens logiques (19) comprennent des moyens pour détecter et signaler une situation de moteur chaud et de batterie (3) complètement chargée, pour autoriser dans cette situation la mode de fonctionnement du moteur dit "stop and go".

9. Véhicule automobile à moteur thermique, **caractérisé en ce qu'**il comporte un dispositif selon l'une quelconque des revendications précédentes.

10. Véhicule selon la revendication 9, **caractérisé en ce qu'**il comporte des cellules photovoltaïques (25) et des moyens pour alimenter en permanence la batterie (3) du véhicule à partir desdites cellules photovoltaïques (25).
